# EUROPÄISCHE PATENTSCHRIFT

(11) **EP 3 619 093 B1**
(45) Veröffentlichungstag und Bekanntmachung des Hinweises auf die Patenterteilung: **09.02.2022**
(21) Anmeldenummer: 18722455.5
(22) Anmeldetag: 02.05.2018
(51) Int. Cl.: B62D 1/181, F16H 25/20

(54) **LENKSÄULE FÜR EIN KRAFTFAHRZEUG UND VERFAHREN ZUR HERSTELLUNG EINER LENKSÄULE**
STEERING COLUMN FOR A MOTOR VEHICLE AND METHOD FOR PRODUCING A STEERING COLUMN
COLONNE DE DIRECTION POUR VÉHICULE À MOTEUR ET PROCÉDÉ DE FABRICATION D'UNE COLONNE DE DIRECTION

(30) Priorität: 05.05.2017 DE 102017207561
(43) Veröffentlichungstag der Anmeldung: 11.03.2020
(73) Patentinhaber: thyssenkrupp Presta AG, 9492 Eschen (LI); thyssenkrupp AG, 45143 Essen (DE)
(72) Erfinder: RIST, Sascha, 6971 Hard (AT); HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2018/061129
(87) Internationale Veröffentlichungsnummer: WO 2018/202672

(56) Entgegenhaltungen:
- EP-A1- 1 980 470
- EP-A1- 3 114 005
- DE-A1- 2 323 436
- DE-A1-102007 041 100

## Beschreibung

### Stand der Technik

Die Erfindung betrifft eine Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der zwischen der Trageinheit und mit der Stelleinheit angeordnet ist, und von dem die Stelleinheit relativ zur Trageinheit verstellbar ist, wobei der Verstellantrieb eine in eine Spindelmutter eingreifende Gewindespindel mit einem Außengewinde aufweist, wobei auf dem Außengewinde der Gewindespindel zur Begrenzung der Bewegung der Spindelmutter in Richtung der Spindelachse ein Anschlagkörper befestigt ist, der einen Gewindeabschnitt der Gewindespindel umgibt.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Manteleinheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse oder kurz Spindelachse, drehend antreibbar, wodurch die Gewindespindel und die Spindelmutter je nach Drehrichtung in Richtung der Gewindespindelachse translatorisch aufeinander zu oder voneinander weg bewegt werden können. In einer Ausführungsform ist die Gewindespindel von der Antriebseinheit, die feststehend mit der Stelleinheit oder der Trageinheit verbunden ist, um ihre Spindelachse drehend antreibbar und greift in die Spindelmutter ein, die an der Trageinheit oder alternativ an der Stelleinheit bezüglich Drehung um die Gewindespindelachse feststehend angebracht ist. In Richtung der Spindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Spindelachse bewirkt. Diese Ausführung wird daher auch als Rotationsspindelantrieb bezeichnet.

In einer alternativen Ausführungsform ist die Gewindespindel bezüglich Drehung um ihre Spindelachse unverdrehbar mit der Trageinheit oder alternativ mit der Stelleinheit gekoppelt und die Spindelmutter ist drehbar, aber in Richtung der Spindelachse feststehend entsprechend an der Stelleinheit oder alternativ an der Trageinheit gelagert. Wie in der ersten Ausführungsform stützt sich die Gewindespindel an der Trageinheit oder an der Stelleinheit ab, und die Spindelmutter entsprechend an der Stelleinheit oder an der Trageinheit, so dass die Gewindespindel in Richtung der Spindelachse translatorisch verschiebbar ist, indem die Spindelmutter von der Antriebseinheit um die Spindelachse drehend angetrieben wird. Diese Ausführung wird auch als Tauchspindelantrieb bezeichnet.

Durch den rotatorischen Antrieb der Gewindespindel wird wie bei der ersten Alternative eine translatorische Verstellung von Trageinheit und Stelleinheit relativ zueinander in Richtung der Spindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann, wobei die Gewindespindel und die Spindelmutter relativ zueinander (rotatorisch und translatorisch) motorisch bewegbar sind.

Zur Realisierung einer Längsverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Spindelachse im Wesentlichen parallel zur Längsachse ausgerichtet sein kann. Zur Höhenverstellung kann ein Spindeltrieb zwischen der Trageinheit und einer daran hö-henverschwenkbar gelagerten Stelleinheit oder Manteleinheit, in der die Stelleinheit aufge-nommen ist, angeordnet sein. An einer Lenksäule können eine motorische Längs- und Hö-henverstellung einzeln oder in Kombination ausgebildet sein.

Eine gattungsgemäße Lenksäule mit einem derartigen Verstellantrieb ist beispielsweise aus der

DE 10 2014 103 028 B3 bekannt. Zur Begrenzung des Verstellwegs des Verstellantriebs ist auf dem Außengewinde der Gewindespindel ein Anschlagkörper in Form einer Hülse angebracht, die mit ihrer Durchgangsöffnung auf das Außengewinde aufgepresst ist und als axialer Endanschlag für die Bewegung der Spindelmutter in Richtung der Spindelachse entlang der Gewindespindel dient.

Die Hülse kann vorteilhaft längs der Spindelachse flexibel auf der Gewindespindel positioniert werden, wodurch die Position des Endanschlags einfach an unterschiedliche Typen von Lenksäulen oder Fahrzeugen angepasst werden kann. Beim Aufpressen wird die Hülse durch die Gewindespindel im Ganzen aufgeweitet und dabei plastisch und elastisch verformt, um einen Längspressverband mit dem Außengewinde zu erzeugen. Um dabei eine hinreichend hohe Haltekraft zu gewährleisten, sind zum Aufpressen jedoch relativ hohe Fügekräfte erforderlich. Außerdem wirkt die für die Haltekraft erforderliche hohe Flächenpressung bereits während des Aufpressens auf die gegeneinander bewegten Fügeflächen, wodurch Spanbildung oder Abrieb auftreten kann. Späne oder Partikel könnten jedoch die Funktion des Spindeltriebs beeinträchtigen und müssen daher unbedingt vermieden oder entfernt werden, wodurch der Fertigungs- und Kontrollaufwand erhöht wird.

Aus der DE 43 44 681 A1 ist ebenfalls ein Verstellantrieb mit einem Anschlagkörper bekannt, der zur Anbringung jedoch eine mechanische Bearbeitung der Gewindespindel erfordert und dadurch noch aufwändiger ist als das vorgenannte Aufpressen einer Hülse.

Angesichts der vorangehend erläuterten Problematik ist es eine Aufgabe der vorliegenden Erfindung, einen Endanschlag für einen Verstellantrieb einer Lenksäule zur Verfügung zu stellen, der einen geringeren Fertigungsaufwand zur Realisierung einer hohen Haltekraft erfordert.

### Darstellung der Erfindung

Diese Aufgabe wird gelöst durch eine Lenksäule für ein Kraftfahrzeug mit den Merkmalen des Anspruchs 1, sowie durch ein erfindungsgemäßes Verfahren zur Herstellung einer derartigen Lenksäule gemäß Anspruch 9. Vorteilhafte Weiterbildungen ergeben sich aus den Unteransprüchen.

Erfindungsgemäß wird für eine Lenksäule der eingangs genannten Art vorgeschlagen, dass der Anschlagkörper mindestens eine partielle plastische Deformation aufweist, wobei die plastische Deformation fest mit dem Außengewinde der Gewindespindel verbunden ist.

Die mindestens eine partielle Deformation bildet einen Befestigungsbereich, der durch eine plastische Umformung lediglich eines Teilbereichs des Anschlagkörpers erzeugt wird. Ein Teilbereich kann ein Umfangsteilbereich, bezogen auf den Umfang der Gewindespindel, sein und/oder ein sich in Achsrichtung erstreckender Längenteilbereich, bezogen auf die axiale Länge des Anschlagkörpers, in der dieser einen Gewindeabschnitt des Außengewindes der Gewindespindel umgibt. Beispielsweise kann in einem Umfangs- und/oder Längenabschnitt des Anschlagkörpers eine Umformoperation ausgeführt werden, durch die das Material des Anschlagkörpers - beispielsweise ein metallischer Werkstoff wie Stahl oder ein Nichteisenmetall - lokal fließt und eine dauerhafte Formänderung erzeugt wird. Bevorzugt kann die Formänderung durch einen Kaltumformprozess erzeugt werden, wie beispielsweise Pressen, Walzen, Prägen, Rollieren, Hämmern oder dergleichen. Im Ergebnis erzeugt die Formänderung eine, bevorzugt mehrere lokale Deformationen, welche separate funktionale Bereiche bzw. Abschnitte an oder in dem Anschlagkörper definieren, in denen jeweils lokal eine feste Fügeverbindung mit der Gewindespindel erzeugt wird.

Im Gegensatz zum Stand der Technik, bei dem eine große Fügekraft erforderlich ist, um eine hinreichend hohe Flächenpressung über die in Umfangs- und Längenrichtung durchgehenden und entsprechend großen Fügeflächen zwischen der Gewindespindel und dem Anschlagkörper bereitzustellen, kann erfindungsgemäß mit der gleichen oder einer geringeren Fügekraft im Bereich einer partiellen Deformation eine höhere Flächenpressung zwischen den Fügepartnern erzeugt werden. Durch eine lokal begrenzte Umformung wird gewissermaßen durch die Deformationen jeweils eine Art lokal integriertes Verbindungs- oder Befestigungselement an oder in dem Anschlagkörper ausgebildet, welches die Realisierung optimierter lokaler Fügeparameter ermöglicht, wodurch die Fügeverbindung höhere Haltekräfte aufnehmen kann.

Durch die Erfindung kann mit einer relativ geringeren Fügekraft eine bessere Haltewirkung des Anschlagkörpers auf der Gewindespindel erreicht werden.

Ein weiterer Vorteil resultiert daraus, dass eine oder mehrere partielle Deformationen in den Anschlagkörper eingebracht werden können, beispielsweise mittels Kaltumformverfahren, wenn sich der Anschlagkörper bereits in der Anschlagposition auf der Gewindespindel angeordnet ist. Im Gegensatz zum Stand der Technik, bei dem die Positionierung durch Aufpressen erfolgt, währenddessen die Fügeflächen mit den Haltekräften belastet sind, wirken bei der Erfindung während der Positionierung zunächst keine signifikanten Fügekräfte zwischen Anschlagkörper und Gewindespindel. Dadurch wird Spanbildung oder Abrieb bei der Montage des Anschlagkörpers praktisch weitgehend ausgeschlossen. Erst bei der Erzeugung der partiellen Deformation werden die Fügeflächen miteinander verbunden.

Eine erfindungsgemäße plastische Deformation ist gegen das Außengewinde gerichtet, so dass sie in Fügekontakt mit dem Außengewinde kommt. Bei der plastischen Umformung, beispielsweise durch ein Kaltumformverfahren, fließt das Material des Anschlagkörpers von außen gegen die Gewindespindel in einem Außengewinde-Teilabschnitt, welcher dem durch die Deformation umgeformten Teilbereich des Anschlagkörpers gegenüberliegt. Beispielsweise kann der Anschlagkörper bezüglich der Spindelachse in radialer Richtung umgeformt werden, beispielsweise durch eine von außen in den Anschlagkörper eingebrachte Einformung, welche eine nach innen ausgeformte Deformation erzeugt, die dabei mit zumindest einer radialen Komponente in Fügekontakt mit dem Außengewinde gebracht wird.

In einer bevorzugten Ausführung der Erfindung ist die Deformation mit einer plastischen Verformung des Außengewindes formschlüssig verbunden. Die plastische Verformung bildet einen dauerhaft verformten Bereich des Außengewindes, der von der ursprünglichen Gewindeform abweicht, beispielsweise eine in Umfangsrichtung und/oder Längenrichtung begrenzte lokale Vertiefung im Gewindeprofil. Dadurch, dass die Deformation des Anschlagkörpers in die Verformung des Außengewindes eingreift, wird ein Formschlusseingriff erzeugt, der sich erfindungsgemäß über einen Umfangs- und/oder Längenteilbereich erstreckt, und dadurch den Anschlagkörper bezüglich Drehung um die Spindelachse und/oder axial bezüglich Bewegung in Richtung der Spindelachse formschlüssig fest mit der Gewindespindel verriegelt. Anders ausgedrückt bilden eine Deformation des Anschlagkörpers und eine korrespondierende Verformung des Außengewindes jeweils eine unlösbare Formschlussverbindung. Anders als im Stand der Technik, bei dem nur die aufgepresste Hülse plastisch verformt wird, werden bei der Erfindung der Anschlagkörper und die Gewindespindel zueinander korrespondierend plastisch verformt, wodurch die Haltewirkung nochmals erhöht wird, insbesondere auch in Achsrichtung.

Die hohe Haltewirkung ermöglicht eine sichere Krafteinleitung in die Gewindespindel, beispielsweise auch bei einem Fahrzeugcrash, wenn durch besonders hohe Kraftspitzen auftreten, die auch auf die Verstellantriebe der Lenksäule einwirken. Dadurch bewirkt ein erfindungsgemäßer Endanschlag eine Erhöhung des Sicherheitsniveaus.

Vorzugsweise werden die Deformation des Anschlagkörpers und die korrespondierende Verformung des Außengewindes der Gewindespindel in einem Umformvorgang erzeugt. Dies kann dadurch erreicht werden, dass bei der Erzeugung der Deformation derart hohe Umformkräfte eingeleitet werden, dass die Deformation in die Gewindespindel eingepresst und dabei plastisch eingeformt wird, so dass ein negativer Abdruck der Deformation in dem Außengewinde erzeugt wird. Vorteilhaft daran ist, dass die Deformation und die Verformung in einem praktisch spielfreien, kombinierten Form- und Kraftschluss miteinander verbunden werden. Dadurch wird eine hohe Haltekraft erreicht, wobei unerwünschte Geräuschbildung durch Relativbewegung im Spiel wirksam vermieden werden kann.

Eine vorteilhafte Ausführung der Erfindung sieht vor, dass der Anschlagkörper eine Durchgangsöffnung mit einem Innendurchmesser (d) aufweist, der größer oder gleich dem Außendurchmesser (D) des Außengewindes ist, wobei die Deformation in einem Teilbereich über den Innendurchmesser (d) nach innen in die Durchgangsöffnung vorsteht. Vor der Montage auf der Gewindespindel, also im nicht auf der Gewindespindel befestigten Zustand, hat der Anschlagkörper eine freie Öffnung, welche in axialer Richtung auf die Gewindespindel aufgeschoben werden kann. Dadurch, dass der freie Durchgangsquerschnitt größer als der äußere Gewinde-Nenndurchmessser ist, kann der Anschlagkörper vor der Erzeugung der Fügeverbindung auf dem Außengewinde positioniert werden, ohne dass plastische Verformung, Spanbildung oder Abrieb auftritt. Dadurch wird die genaue Positionierung erleichtert, und es treten keine potentiell schädlichen Verunreinigungen durch Späne oder abgeriebene Partikel auf.

Bevorzugt ist der Anschlagkörper hülsenförmig ausgebildet ist. Der Anschlagkörper kann als rohrabschnittförmige, hohlzylindrische Hülse ausgebildet sein oder eine derartige Hülse aufweisen. Eine Hülse kann besonders einfach gefertigt werden, indem sie als Abschnitt von einem Rohr oder Hohlprofil mit rundem oder unrundem Querschnitt abgelängt wird. Mit ihrer axialen Durchgangsöffnung, die bevorzugt einen Innendurchmesser bzw. einen freien Durchgangsquerschnitt hat der größer oder gleich dem Gewindeaußendurchmesser der Gewindespindel ist, kann die Hülse axial auf das Außengewinde der Gewindespindel bis in die Montageposition des Endanschlags aufgeschoben werden. Im Gegensatz zum Stand der Technik, in dem beim Positionieren der Hülse bereits die Fügekraft anliegt, ist die Positionierung bei der erfindungsgemäßen Hülse möglich, bevor die Fixierung durch Erzeugung der zumindest einen Deformation am Anschlagkörper erfolgt. Bevorzugt wird die Hülse zur Erzeugung der Fügeverbindung durch mechanische Krafteinwirkung von außen lokal zur Erzeugung einer oder mehrerer Deformationen umgeformt, die ihrerseits mechanisch von außen gegen die Gewindespindel angepresst werden, so dass die Deformationen die dadurch ausgebildeten negativen Verformungen im Gewinde formschlüssig und spielfrei ausfüllen.

Eine Deformation kann jeweils durch eine von außen in den Anschlagkörper eingebrachte Um- oder Einformung gebildet werden. In den zunächst unverformten Anschlagkörper, beispielsweise eine rohrabschnittförmige Hülse, können zur Erzeugung der Fügeverbindung eine oder mehrere Deformationen durch Einpressen oder Einprägen eines in radialer Richtung bewegten Presswerkzeugs in die äußere Mantelfläche erfolgen, oder mittels einer Rollierwalze, die beim Abrollen in Achs- oder Umfangsrichtung oder schräg dazu eine Vertiefung von außen in die Hülse einwalzt. Dadurch wird die Hülse auf ihrer gegen das Außengewinde anliegenden Innenfläche radial nach innen lokal ausgeformt und gegen das Gewinde angepresst oder unter plastischer Verformung formschlüssig in dieses eingepresst. Alternativ oder zusätzlich kann die Hülse in axialer Richtung deformiert werden, beispielsweise durch lokale Stauchung. Dies kann beispielsweise dadurch realisiert werden, dass ein stempel- oder dornförmiges Presswerkzeug über einen Umfangsteilabschnitt stirnseitig in den Wandungsquerschnitt gepresst wird, so dass Material der Hülsenwandung radial nach innen in die Durchgangsöffnung verdrängt wird und als erfindungsgemäße Deformation lokal kraft- und/oder formschlüssig mit dem Außengewinde gefügt wird.

Unter der Durchgangsöffnung ist eine Aufnahmeöffnung zur Aufnahme der Gewindespindel zu verstehen. Unter der Durchgangsöffnung ist somit ebenfalls eine Sacklochöffnung zu verstehen.

Eine Deformation kann sich über einen Umfangsteilabschnitt und/oder einen Längenteilabschnitt des Anschlagkörpers erstrecken. Beispielsweise kann ein Umfangsteilbereich der Wandung einer rohrförmigen Hülse durch Einpressen oder Rollieren einer in Achsrichtung verlaufenden Vertiefung zur Bildung einer Deformation umgeformt sein, oder ein Längenteilbereich mit einer in Umfangsrichtung umlaufenden Einformung. Es ist ebenfalls möglich, einen in Umfangs- und Achsrichtung begrenzten Teilbereich zur Ausbildung einer Deformation umzuformen, beispielsweise durch radiales Einpressen eines Presswerkzeugs in die Wandung einer Hülse. Dadurch, dass erfindungsgemäß jeweils nur ein begrenzter Teilbereich umgeformt wird, kann mit einer gegebenen Umformkraft eine höhere Flächenpressung zwischen der Deformation und dem Außengewinde realisiert werden, als im Stand der Technik, und die Haltekraft der dadurch erzeugten Fügeverbindung kann erhöht werden.

Bevorzugt kann eine Mehrzahl von Deformationen über den Anschlagkörper verteilt angeordnet sein. Beispielsweise können zwei, drei oder mehr Vertiefungen in Umfangsrichtung verteilt von außen in eine rohrförmige Hülse plastisch eingeformt werden, oder mit axialen Abstand zueinander in Achsrichtung aufeinanderfolgend.

Es kann vorgesehen sein, dass der Anschlagkörper einen Anbindungsabschnitt aufweist. Ein Anbindungsabschnitt kann beispielsweise ein Gelenkkopf sein, welcher eine Verbindung der Gewindespindel mit der Stelleinheit oder der Trageinheit ermöglicht. Ein Gelenkkopf mit Befestigungsmitteln kann beispielsweise an einer als Anschlagkörper dienenden Hülse angebracht oder ausgebildet sein. Dabei hat die erfindungsgemäße Fügeverbindung mit der Gewindespindel über die partiellen, lokalen Deformationen den Vorteil einer unlösbaren, besonders festen und haltbaren Verbindung, die hohen Verstellkräften oder auch außergewöhnlich hohen Kraftspitzen, die beispielsweise bei einem Fahrzeugcrash auf die Gewindespindel einwirken können, problemlos standhält. Dadurch wird der Sicherheitsstandard der Lenksäule erhöht.

Der Anschlagkörper kann Stahl, Buntmetall, wie beispielsweise Messing, Bronze, Rotguss oder dergleichen, zusätzlich oder alternativ ein Kunststoffmaterial aufweisen. Der Anschlagkörper kann ganz oder teilweise aus einem oder mehreren dieser Materialien ausgebildet sein. Durch die Wahl des Materials können unterschiedliche materialspezifische Eigenschaften für die Funktion des erfindungsgemäßen Anschlagkörpers genutzt werden, um diesen funktional zu optimieren. Beispielsweise können durch die plastische und elastische Verformbarkeit die Haltewirkung und/oder das Anschlagverhalten eingestellt werden.

Durch die Wahl des Materials und gegebenenfalls die Kombination unterschiedlicher Materialien kann die Fertigung optimiert werden. Beispielsweise können partielle plastische Deformationen in einen aus einem thermoplastischen Kunststoff gebildeten Anschlagkörper thermisch mittels Warmumformen eingebracht werden, oder Ultraschallaufschmelzen. Mittels thermischer Fügeverfahren kann ein ganz oder teilweise aus Kunststoff gebildeter Anschlagkörper stoffschlüssig fixiert werden, beispielsweise mittels Ultraschall- oder Reibschweißen.

Bevorzugt kann der Anschlagkörper einen elastischen Anteil umfassen. Der elastische Anteil kann durch Einsatz elastisch verformbaren Materials erreicht werden, welches weicher und leichter elastisch verformbar ist als der Werkstoff, aus dem die Spindelmutter besteht, üblicherweise ein Metall wie etwa Buntmetall oder Stahl. Beispielsweise kann ein gummiartig verformbares Elastomer eingesetzt werden. Dadurch kann eine Dämpfung des Anschlags realisiert werden. Das elastische Material kann abschnittweise aufgebracht sein, beispielsweise als Beschichtung oder angefügter Anschlagkörper. Beispielsweise kann der Anschlagkörper einen metallischen Grundkörper aufweisen, der mit einem elastischen Anteil aus einem weicheren Kunststoff- oder Gummimaterial verbunden ist, beispielsweise einer durchgehenden oder partiellen Beschichtung.

Alternativ oder zusätzlich kann ein elastischer Anteil durch die Formgebung des Anschlagkörpers realisiert werden, beispielsweise durch dünnwandige Federzungen oder Hohlkörper aus metallischen oder anderen Werkstoffen.

Ein Verfahren zur Herstellung einer Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der zwischen der Trageinheit und mit der Stelleinheit angeordnet ist, und von dem die Stelleinheit relativ zur Trageinheit verstellbar ist, wobei der Verstellantrieb eine in eine Spindelmutter eingreifende Gewindespindel mit einem Außengewinde aufweist, wobei auf der Gewindespindel zur Begrenzung der Bewegung der Spindelmutter in Richtung der Spindelachse ein Anschlagkörper befestigt ist, der einen Gewindeabschnitt der Gewindespindel umgibt, sieht erfindungsgemäß vor, dass der Anschlagkörper auf der Gewindespindel positioniert wird, und anschließend der Anschlagkörper partiell plastisch verformt zur Erzeugung mindestens einer Deformation, die fest mit dem Außengewinde der Gewindespindel verbunden ist.

Zur Durchführung des erfindungsgemäßen Verfahrens wird ein Anschlagkörper bereitgestellt, beispielsweise in Form einer rohrabschnittförmigen Hülse, die eine axiale Durchgangsöffnung hat, die im Querschnitt größer oder zumindest gleich dem Außendurchmesser der Gewindespindel ist, der dem Nenndurchmesser des Außengewindes entspricht. Bevorzugt handelt es sich dabei um eine kreiszylindrische Durchgangsöffnung, wobei die besagte Hülse als hohlzylindrischer Rohrabschnitt mit kreisrundem Querschnitt ohne Vorverfomungen ist. Der Anschlagkörper wird mit der Durchgangsöffnung auf die Gewindespindel aufgeschoben, bis die Position des Endanschlags erreicht ist. Dies ist - wie vorangehend erläutert - problemlos ohne die Gefahr von Spanbildung oder Abrieb möglich. Zur Fixierung wird mindestens eine, bevorzugt mehrere partielle Deformationen des Anschlagkörpers erzeugt, beispielsweise durch bereichsweise plastische Einformung der Hülsenwandung mittels eines von außen einwirkenden Press- oder Walzwerkzeugs. Im Bereich der Deformationen wird eine Fügeverbindung zwischen Anschlagkörper und Gewindespindel erzeugt.

Besonders vorteilhaft ist es, dass die Deformation des Anschlagkörpers plastisch am Außengewinde abgeformt wird, zur Erzeugung einer formschlüssig mit der Deformation verbundenen Verformung. Dabei wird die Deformation in das Material der Gewindespindel eingepresst, so dass Material unter Bildung einer Verformung im Außengewinde plastisch verdrängt wird. Dadurch wird eine spielfreie, kraft- und formschlüssige Verbindung zwischen Deformation und Verformung gebildet. Die Verbindung ist durch den plastischen Materialfluss unlösbar. Besonders hervorzuheben ist dabei, dass durch die abschnittweise Verformung mindestens eines Gewindegangs nicht nur der Anschlagkörper gegen Verdrehung um die Spindelachse gesichert ist, sondern es auch unmöglich ist, den Anschlagkörper ohne Materialzerstörung durch eine Schraubbewegung von dem Außengewinde zu lösen, d.h. abzuschrauben. Dieser Vorteil resultiert insbesondere daraus, dass der Anschlagkörper und die Gewindespindel bei der Erzeugung der Fügeverbindung plastisch verformt werden.

Eine nicht erfindungsgemäße Ausführungsform umfasst weiterhin eine Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der zwischen der Trageinheit und mit der Stelleinheit angeordnet ist, und von dem die Stelleinheit relativ zur Trageinheit verstellbar ist, und der als Spindeltrieb ausgebildet ist mit einer in eine Spindelmutter eingreifenden Gewindespindel, wobei die Gewindespindel ein Außengewinde aufweist, das mindestens einen schraubenförmig umlaufenden Gewindegang mit axialen Gewindeflanken aufweist, und die Spindelmutter ein korrespondierendes Innengewinde mit einer schraubenförmig umlaufenden Gewindenut mit axialen Innenflanken aufweist, oder wobei die Spindelmutter ein Innengewinde aufweist, das mindestens einen schraubenförmig umlaufenden Gewindegang mit axialen Gewindeflanken aufweist, und die Gewindespindel ein korrespondierendes Außengewinde mit einer schraubenförmig umlaufenden Gewindenut mit axialen Innenflanken aufweist, und wobei die Gewindespindel und wobei die Spindelmutter relativ zueinander um die Spindelachse drehend motorisch antreibbar sind. Um die Laufruhe eines Verstellantriebs zu verbessern wird erfindungsgemäß vorgeschlagen, dass im Gewindeprofil zwischen den Gewindeflanken zumindest abschnittweise mindestens eine radiale Einformung ausgebildet ist, und die Gewindeflanken axial gegeneinander in den Querschnitt der Einformung elastisch verformbar sind.

Gemäß der nicht erfindungsgemäßen Ausführungsform ist der Gewindegang der Gewindespindel in sich in axialer Richtung elastisch verformbar ausgestaltet. Um dies zu erreichen, wird von außen eine nutförmige, mit dem Gewinde schraubenförmig umlaufende Vertiefung in den Gewindegang eingebracht. Dadurch wird zwischen den gegenüberliegenden Gewindeflanken ein offener Querschnittsbereich ausgebildet. Anders ausgedrückt hat das Gewinde anstelle eines massiven, gefüllten Profilquerschnitts einen radial offenen und dadurch etwa rinnen- oder U-förmigen Querschnitt mit Seitenwänden, die auf ihren axialen Außenseiten die Gewindeflanken aufweisen. Die Seitenwände können in axialer Richtung in den offenen U-Querschnitt der Einformung einfedern, so dass der Gewindegang im Profilquerschnitt in axialer Richtung elastisch verformbar ist. Entsprechend können die beiden sich axial bezüglich des Profilquerschnitts gegenüberliegenden Gewindeflanken in axialer Richtung, d.h. in den offenen Querschnitt hinein federnd gegeneinander zusammengedrückt werden.

In seiner axialen Breite kann der Gewindegang so angepasst werden, dass im entspannten, nicht eingeschraubten Zustand das Gewindeprofil eine größere axiale Breite hat als die Innenbreite der korrespondierenden Gewindenut beträgt, anders ausgedrückt der Gewindegang axiales Übermaß relativ zur Gewindenut hat. Auf diese Weise kann erreicht werden, dass die Gewindeflanken der Gewindespindel oder der Spindelmutter in der Gewindenut gegen die Innenflanken des Innengewindes oder des Außengewindes elastisch vorgespannt sind. Die Gewindeflanken werden beim Einschrauben der Gewindespindel in die Spindelmutter zwischen den Innenflanken des Innengewindes axial zusammengepresst, so dass der Gewindegang axial in der Gewindenut elastisch verspannt wird. Durch die elastische Verspannung kann das axiale Spiel des Gewindegangs in der Gewindenut und damit das Axialspiel zwischen Gewindespindel und Spindelmutter beseitigt oder zumindest reduziert werden. Ein positiver Effekt ist, dass das sogenannte Umkehrspiel, welches beim Wechsel der Antriebsrichtung des Spindeltriebs auftritt und zu Geräuschbildung und erhöhtem Verschleiß führen kann, nahezu vollständig ausgeglichen werden kann.

Die vorangehend für die Gewindespindel beschriebene nicht erfindungsgemäße Ausführung des Gewindegangs kann funktionsgleich auf die Ausgestaltung der Spindelmutter übertragen werden, wobei die Spindelmutter ein Innengewinde aufweist, das mindestens einen schraubenförmig umlaufenden Gewindegang mit axialen Gewindeflanken aufweist, und die Gewindespindel ein korrespondierendes Außengewinde mit einer schraubenförmig umlaufenden Gewindenut mit axialen Innenflanken aufweist.

Es ist ebenfalls denkbar und möglich, dass die Gewindegänge von Gewindespindel und

Spindelmutter beide durch eine radiale Einformung axial elastisch ausgestaltet sind.

Die elastische Spannkraft, mit der die Gewindeflanken axial gegen die Innenflanken angepresst werden, kann durch die Elastizität des Materials der Gewindespindel oder der Spindelmutter, die radiale Tiefe und axiale Breite der Einformung relativ zum Profilquerschnitt des Gewindegangs, und die Größe des axialen Übermaßes, um das der Gewindegang beim Einschrauben der Gewindespindel in die Spindelmutter axial elastisch zusammengepresst wird, vorgegeben werden. Dadurch kann die elastische Spannkraft groß genug eingestellt werden, um Umkehrspiel auch bei größtmöglicher im Betrieb auftretender Umkehrgeschwindigkeit zu unterdrücken. Dabei kann der Betrag der Spannkraft nach oben begrenzt werden, damit die Reibungskräfte zwischen den gewinde- und Innenflanken bei einer Betätigung des Verstellantriebs innerhalb akzeptabler Grenzwerte bleiben.

Es kann vorgesehen sein, dass die Einformung sich über die gesamte Länge in Achsrichtung über das Außengewinde der Gewindespindel oder das Innengewinde der Spindelmutter erstreckt. Es kann jedoch auch in axialer Richtung abschnittweise ausgebildet sein, beispielsweise in einem oder beiden axialen Endbereichen. Dadurch können Bereiche des Gewindes, die im Betrieb besonders anfällig für axiales Spiel sind, oder in denen axiales Spiel besonders nachteilig ist, oder die in erhöhtem Maße verschleißanfällig sind, mit elastischen Gewindegängen ausgestaltet werden.

Weiterhin kann vorgesehen sein, dass der offene Querschnitt der Einformung über die axiale Erstreckung des Gewindes abnehmend oder ansteigend ausgebildet ist. Dadurch kann eine lokal angepasste elastische Eigenschaft realisiert werden, beispielsweise dadurch, dass die Einformung im Endbereich des Gewindes eine größere radiale Tiefe und/oder axiale Breite hat, die zum Mittelbereich hin abfällt, so dass im Endbereich eine größere Elastizität zur Verfügung gestellt wird, um denkbare Fehlstellungen auch unter extremen Betriebszuständen ausgleichen zu können.

Ein nicht erfindungsgemäßes Gewinde kann besonders rationell im Kunststoff-Spritzgussverfahren realisiert werden, bei dem eine Spindelmutter und/oder eine Gewindespindel ganz oder teilweise aus einem thermoplastischen Kunststoffmaterial hergestellt wird. Die erfindungsgemäße Einformung oder Vertiefung im Gewindegang kann mit ähnlichen Mitteln und Verfahren gespritzt und entformt werden, die prinzipiell von der Fertigung von Gewinden im Spritzguss bekannt sind.

Bei einer Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der zwischen der Trageinheit und mit der Stelleinheit angeordnet ist, und von dem die Stelleinheit relativ zur Trageinheit verstellbar ist, wobei der Verstellantrieb eine in eine Spindelmutter eingreifende Gewindespindel mit einem Außengewinde aufweist, die motorisch relativ zur Spindelmutter drehend antreibbar ist, wobei auf dem Außengewinde der Gewindespindel zur Begrenzung der Bewegung der Spindelmutter in Richtung der Spindelachse ein Anschlagkörper befestigt ist, der einen Gewindeabschnitt der Gewindespindel umgibt, bei welcher der Anschlagkörper mindestens eine partielle plastische Deformation aufweist, die sich über einen Teilbereich des Anschlagkörpers erstreckt, in dem sie fest mit dem Außengewinde der Gewindespindel verbunden ist, wobei das Außengewinde mindestens einen schraubenförmig umlaufenden Gewindegang mit axialen Gewindeflanken aufweist, und die Spindelmutter ein korrespondierendes Innengewinde mit einer schraubenförmig umlaufenden Gewindenut mit axialen Innenflanken aufweist, oder wobei die Spindelmutter ein Innengewinde aufweist, das mindestens einen schraubenförmig umlaufenden Gewindegang mit axialen Gewindeflanken aufweist, und die Gewindespindel ein korrespondierendes Außengewinde mit einer schraubenförmig umlaufenden Gewindenut mit axialen Innenflanken aufweist, kann vorgesehen sein, dass im Gewindeprofil zwischen den Gewindeflanken zumindest abschnittweise mindestens eine radiale Einformung ausgebildet ist, und die Gewindeflanken axial gegeneinander in den Querschnitt der Einformung elastisch verformbar sind.

Die zuletzt beschriebene Ausführung vereint die Vorteile eines erfindungsgemäß auf dem Gewinde angebrachten Anschlagkörper mit einem axial vorgespannten Gewinde. Dabei ermöglicht der erfindungsgemäße Anschlagkörper durch die partielle plastische Deformation eine sichere Fixierung auf dem Gewinde mit in axialer Richtung elastischem Gewindegang. Die im Stand der Technik bekannten Anschlagkörper und Befestigungsverfahren wären speziell für diese Anwendung zu aufwendig oder würden keine sichere Fixierung des Endanschlags ermöglichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Darstellung einer Lenksäule mit einer elektrischen Verstellung;
- Figur 2: die Lenksäule aus Figur 1 in einer schematischen perspektivischen Seitenansicht;
- Figur 3: die Lenksäule aus Figur 1 in einer weiteren schematischen perspektivischen Seitenansicht;,
- Figur 4: ein Verstellantrieb für eine Lenksäule gemäß den vorgenannten Figuren in einer auseinandergezogenen Darstellung in einer ersten Ausführungsform;,
- Figur 5: einen Längsschnitt in Achsrichtung der Gewindespindel durch einen Verstellantrieb gemäß Figur 4,
- Figur 6: eine Detailansicht des Endanschlags (Anschlagkörpers) aus Figur 4,
- Figur 7: einen Querschnitt B-B durch den Verstellantrieb gemäß Figur 4,
- Figur 8: eine zweite Ausführungsform eines Endanschlags (Anschlagkörpers) in einer Ansicht wie in Figur 6,
- Figur 9: eine dritte Ausführungsform eines Endanschlags (Anschlagkörpers) in einer Ansicht wie in Figur 6,
- Figur 10: eine vierte Ausführungsform eines Endanschlags (Anschlagkörpers) in einer Ansicht wie in Figur 6,
- Figur 11: eine fünfte Ausführungsform eines Endanschlags (Anschlagkörpers) in einer Ansicht wie in Figur 6,
- Figur 12: einen teilweisen Längsschnitt durch einen Verstellantrieb mit einer nicht erfindungsgemäßen Spindelmutter,
- Figur 13: eine Detailansicht des Längsschnitts gemäß Figur 12.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

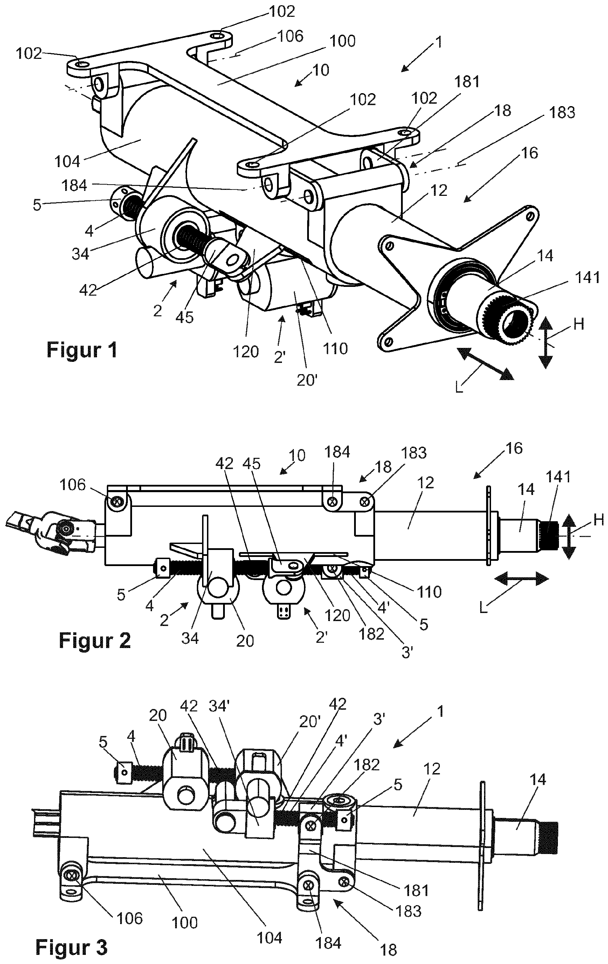

Figur 1 zeigt eine Lenksäule 1, welche eine mit dem Chassis eines hier nicht gezeigten Kraftfahrzeugs verbindbare Trageinheit 10 aufweist, an welcher eine Stelleinheit 16 verstellbar gehalten ist, und zwar in Längsrichtung L und in Höhenrichtung H, wie mit den Doppelpfeilen angedeutet ist. Die Trageinheit 10 umfasst eine Konsole 100, welche am Chassis des Kraftfahrzeugs, beispielsweise über Befestigungsbohrungen 102, befestigt werden kann.

Die Stelleinheit 16 umfasst ein Mantelrohr 12, in welchem eine Lenkspindel 14 drehbar gelagert ist. Am lenkradseitigen Ende 141 der Lenkspindel 14 kann ein hier nicht gezeigtes Lenkrad befestigt werden. Die Lenkspindel 14 dient dazu, ein von einem Fahrer über das Lenkrad auf die Lenkspindel 14 eingebrachtes Lenkmoment in bekannter Weise auf ein hier nicht gezeigtes lenkbares Rad zu übertragen. Die Lenkspindel 14 kann dabei die Lenkbewegung von dem Lenkrad auf das lenkbare Rad unter Zwischenschaltung eines Lenkgetriebes, gegebenenfalls unter Zuhilfenahme einer Hilfskraftunterstützung, übertragen.

In einer Variante kann die Lenkbewegung von der Lenkspindel 14 auch sensorisch, beispielsweise elektrisch, elektronisch oder magnetisch, abgetastet werden und in eine Steuerung eingespeist werden, welche unter Zuhilfenahme einer Lenkeinrichtung eine Verschwenkung des lenkbaren Rades zur Darstellung der Lenkbewegung ausführt. Derartige Systeme sind als Steer-by-wire bekannt.

Das Mantelrohr 12 ist in einer Manteleinheit 104 in Längsrichtung L, das ist die Längsverstellrichtung, verschiebbar gehalten, wobei sich die Längsrichtung L in Achsrichtung der Lenkspindel 14 erstreckt. Durch eine Verstellung des Mantelrohrs 12 gegenüber der Manteleinheit 104 kann entsprechend eine Längsverstellung der Lenkspindel 14 und damit des nicht dargestellten Lenkrades zur Anpassung der Position des Lenkrades an die Sitzposition eines Fahrers des Kraftfahrzeugs erreicht werden.

Die Manteleinheit 104 ist verschwenkbar an der Konsole 100 befestigt und kann um eine Schwenkachse 106 gegenüber der Konsole 100 verschwenkt werden. Eine Verstellbarkeit der Stelleinheit 16 in einer Höhenrichtung H, das ist die Höhenverstellrichtung, die im Wesentlichen senkrecht zur Längsrichtung L orientiert ist, wird darüber ermöglicht, dass das Mantelrohr 12 über einen Verschwenkmechanismus 18 an der Konsole 100 gehalten ist.

Damit ergibt sich eine Verschwenkbarkeit des Mantelrohrs 12 und der Lenkspindel 14 gegenüber der Trageinheit 10 und insbesondere gegenüber der Konsole 100 um die Schwenkachse 106 derart, dass auch eine Höhenverstellung des hier nicht gezeigten und an der Lenkspindel 14 angeordneten Lenkrades erreicht wird, um auch auf diese Weise eine Anpassung der Position des Lenkrades an die Sitzposition des Fahrers zu erreichen.

Im Ausführungsbeispiel ist für jede der beiden Verstellrichtungen ein separater Verstellantrieb 2, 2' mit jeweils einem separatem Spindeltrieb, umfassend eine Gewindespindel 4, 4', sowie eine Spindelmutter 3.

Ein Verstellantrieb 2 ist vorgesehen, mittels welchem eine Verstellung der Stelleinheit 16 gegenüber der Trageinheit 10 in Längsrichtung L erreicht werden kann. Der Verstellantrieb 2 umfasst eine Gewindespindel 4, die ein Außengewinde 42 aufweist und welche über einen Anlenkhebel 120 mit dem Mantelrohr 12 verbunden ist. Der Anlenkhebel 120 ist in einem Schlitz 110 in der Manteleinheit 104 so verschiebbar geführt, dass eine Verschiebung des Anlenkhebels 120 gegenüber der Manteleinheit 104 zu einer Verschiebung der Stelleinheit 16 gegenüber der Trageinheit 10 in Längsrichtung L führt.

Die Gewindespindel 4 ist über einen Gelenkkopf 45 an dem Anlenkhebel 120 gehalten und erstreckt sich mit ihrer Spindelachse S in Längsrichtung L. Die Gewindespindel 4 ist in einer Spindelmutter 3 gehalten, welche ein Innengewinde 32 aufweist, das mit dem Außengewinde 42 der Gewindespindel 4 in Eingriff steht. Die Spindelmutter 3 ist drehbar, aber in Längsrichtung L ortsfest bezüglich der Manteleinheit 104 in einem Getriebegehäuse 34 gelagert, so dass eine Drehung der Spindelmutter 3 wegen des Gewindeeingriffs mit der Gewindespindel 4 zu einer Axialbewegung der Gewindespindel 4 relativ zur Spindelmutter 3 in Richtung der Spindelachse S führt. Mit anderen Worten findet durch eine Drehung der Spindelmutter 3 eine Relativbewegung zwischen Mantelrohr 12 und Manteleinheit 104 so statt, dass eine Verstellung der Position der Stelleinheit 16 gegenüber der Trageinheit 10 durch die Drehung der Spindelmutter 3 bewirkt wird.

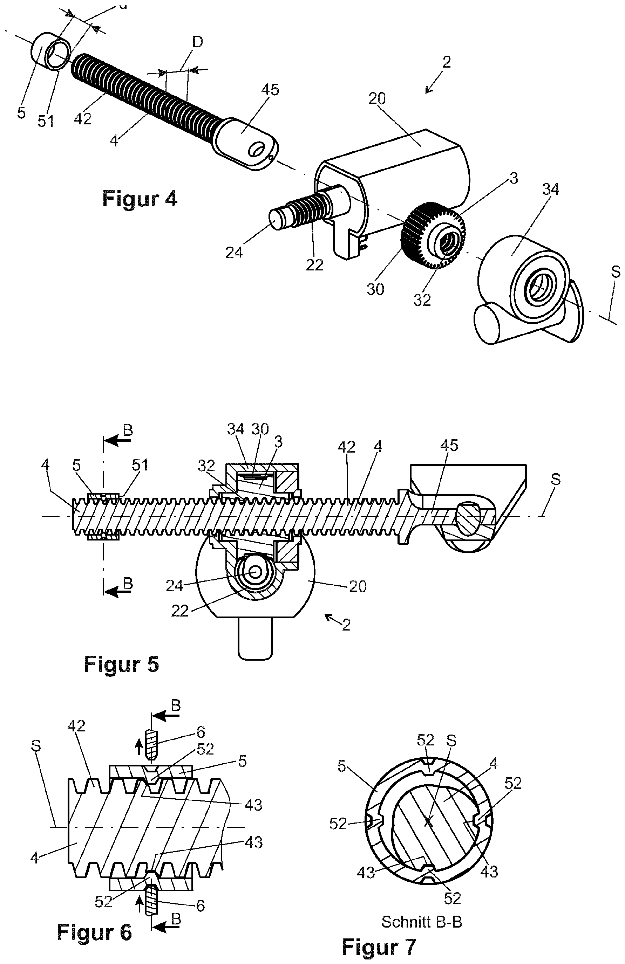

Der Verstellantrieb 2 umfasst weiterhin einen Antriebsmotor 20, auf dessen Abtriebswelle 24 eine in Figur 4 gut zu erkennende Schneckenwelle 22 angeordnet ist. Die Schneckenwelle 22 greift in eine Außenverzahnung 30 der Spindelmutter 3 ein, wobei die Außenverzahnung 30 als Schneckenrad ausgebildet ist. Die Rotationsachse der Schneckenwelle 22 und die Rotationsachse der Spindelmutter 3 stehen senkrecht aufeinander, wie es bei einem Schneckengetriebe an sich bekannt ist.

Entsprechend kann durch eine Rotation der Abtriebswelle 24 des Antriebsmotors 20 die Spindelmutter 3 rotiert werden, wodurch eine Längsverstellung der Stelleinheit 16 in Längsrichtung X gegenüber der Manteleinheit 104 und damit eine Längsverschiebung der Stelleinheit 16 gegenüber der Trageinheit 10 stattfindet.

Es ist für ein derartiges Verstellsystem auch denkbar und möglich, die Gewindespindel 4 zu verdrehen und dadurch dann eine gegenüber dieser nicht drehbar fixierte Spindelmutter 3 zu verschieben. In diesem Fall wäre dann die Spindelmutter 3 mit der Manteleinheit 104 verbunden, um die Verschiebung der Spindelmutter 3 auf die Manteleinheit 104 zu übertragen. Dies ist in den Figuren am Beispiel der Höhenverstellung veranschaulicht.

Ein entsprechender Verstellantrieb 2' ist besonders gut in Figur 3 zu erkennen. Dieser weitere Verstellantrieb 2' weist im Prinzip den gleichen Aufbau wie der erste Verstellantrieb 2 auf. Der weitere Verstellantrieb 2' treibt eine Verstellbewegung der Stelleinheit 16 in Höhenrichtung H an. Über die Verdrehung einer Gewindespindel 4' wird eine Spindelmutter 3' in Achsrichtung der Spindelachse S verschoben. Die Spindelmutter 3' ist über ein Gelenk 182 mit einem Stellhebel 181 verbunden. Der Stellhebel 181 ist verschwenkbar in einer Gelenkachse 183 an der Manteleinheit 104 und in einer Gelenkachse 184 an der Konsole 100 gelagert. Dadurch wird erreicht, dass bei einer relativen Drehung der Gewindespindel 4' die Spindelmutter 3' in Achsrichtung bewegt wird und eine entsprechende Verstellung auf den Verschwenkmechanismus 18 und damit auf die Stelleinheit 16 und die Manteleinheit 104 aufbringt. Für einen erforderlichen Längenausgleich kann in einem der Gelenke eine entsprechende Ausgleichsfunktion integriert sein. Im Beispiel ist dies durch eine Langlochaufnahme eines die Schwenkachse 106 bildenden Bolzens in der Konsole dargestellt.

In Figur 4 ist der Verstellantrieb 2 noch einmal in einer schematischen, perspektivischen und auseinandergezogenen Ansicht gezeigt. Der Antriebsmotor 20 hat eine Abtriebswelle 24, auf welcher die Schneckenwelle 22 ausgebildet ist. Die Schneckenwelle 22 steht mit der als Schneckenrad ausgebildeten Außenverzahnung 30 der Spindelmutter 3 im Eingriff. Die Spindelmutter 3 ist im Getriebegehäuse 34 in Längsrichtung der Spindelachse S ortsfest und um die Spindelachse S der Gewindespindel 4 drehbar gehalten. Die Spindelmutter 3 ist dabei in Richtung der Spindelachse S der Gewindespindel 4 relativ zur Manteleinheit 104 nicht verschiebbar gelagert. Die Gewindespindel 4 steht mit ihrem Außengewinde 42 in Eingriff mit dem Innengewinde 32 der Spindelmutter 3. Das Getriebegehäuse 34 sorgt entsprechend dafür, dass durch eine Drehung der Spindelmutter 3 die mit dieser in Eingriff stehende Gewindespindel 4 in Richtung der Spindelachse S der Gewindespindel 4 verschoben werden kann.

An einem Ende der Gewindespindel 4 ist ein Gelenkkopf 45 angeordnet, der zur gelenkigen Anbindung des Verstellantriebs 2, 2'an den Anlenkhebel 120 oder den Stellhebel 181 dient. Der Gelenkkopf 45 kann einstückig mit der Gewindespindel 4 ausgebildet sein, oder, wie weiter unten noch ausgeführt wird, auf dem Außengewinde 42 der Gewindespindel 4 befestigt sein.

Um den Verstellweg des Verstellantriebs 2 zu begrenzen und insbesondere die Bewegung der Gewindespindel 4, 4' in Bezug zur Spindelmutter 3 zu begrenzen, um die jeweilige Lenksäule 1 an die Einbaugegebenheiten in dem jeweiligen Kraftfahrzeugtyp anpassen zu können, wird der Verstellweg durch einen Endanschlag begrenzt. Der Endanschlag wird durch einen auf der Gewindespindel 4 in einem Gewindeabschnitt 40 in Nähe des einen Endes angebrachten Anschlagkörper gebildet, der in den gezeigten Beispielen als Hülse 5 ausgebildet ist. Die Hülse 5 weist eine stirnseitige axiale Anschlagfläche 51 auf, gegen welche die Spindelmutter 3 oder das Getriebegehäuse 34 in Achsrichtung der Spindelachse S anschlagen kann, so dass auf diese Weise die relative Bewegung von Gewindespindel 4 und Spindelmutter 3 in Achsrichtung und somit der Verstellweg des Verstellantriebs 2 begrenzt wird.

Die Hülse 5, welche den erfindungsgemäßen Anschlagkörper bildet, hat vor der Montage, also in dem in Figur 4 dargestellten auseinander gezogenen Zustand, als Rohling die Form eines hohlzylindrischen Rohrabschnitts, der eine Durchgangsöffnung mit dem Innendurchmesser d hat. Der Rohrabschnitt kann einfach durch Ablängen von Rohrmaterial in der geforderten Länge bereitgestellt werden. Der Innendurchmesser d wird größer als der Nenndurchmesser D der Gewindespindel 4 gewählt, dies entspricht dem Außendurchmesser des Außengewindes 42, so dass die Hülse 51 mit ihrer Durchgangsöffnung in Richtung der Spindelachse S auf die Gewindespindel 4 im Wesentlichen ohne Formänderung aufgesetzt und positioniert werden kann, etwa in der Anschlagposition gemäß Figur 5, die einen Schnitt in zusammengebautem Zustand längs der Spindelachse S zeigt.

Aus der vergrößerten Detaildarstellung von Figur 6, die einen Ausschnitt im Bereich der Hülse 5 aus Figur 5 zeigt, und Figur 7 , die eine Querschnittsansicht B-B aus Figur 6 in Richtung der Spindelachse S zeigt, ist die erfindungsgemäße Verbindung der Hülse 5 mit der Gewindespindel 4 ersichtlich.

Mittels eines Pressstempels 6, der bezüglich der Spindelachse S radial von außen gegen die Hülse 5 angepresst wird, wie dies mit für den in Figur 6 unten dargestellten Presstempel 6 mit dem radial senkrecht gegen die Spindelachse S gerichteten Pfeil angedeutet ist, wird in der Wandung der Hülse 5 eine partielle plastische Deformation 52 erzeugt. Nach der Ausführung des Presshubs wird der Pressstempel 6 radial nach außen zurückbewegt, wie dies für den in Figur 6 oben dargestellte Pressstempel 6 mit dem radial nach außen gerichteten Pfeil angedeutet ist.

In dem lokalen Teilbereich der Hülse 5, in dem der Pressstempel 6 von außen eingeformt wird, erfolgt eine dauerhafte plastische Verformung, wobei die Deformation 52 radial nach innen in den Durchgangsquerschnitt bis in den Nenndurchmesser D der Gewindespindel 4 vorsteht. Dadurch wird die Deformation 52 radial in das Außengewinde 42 plastisch eingepresst, wodurch im Außengewinde 42 als negativer Formabdruck der Deformation 52 eine plastische Verformung 43 auftritt. Die Verformung 43 bildet eine eingeformte Vertiefung, welche die radial nach innen vorspringende, sich über einen Teilbereich erstreckende Deformation 52 bezüglich Drehung um die Spindelachse S und auch bezüglich der Achsrichtung der Spindelachse S formschlüssig aufnimmt. Diese Formschlussverbindung zwischen der Hülse 5 und der Gewindespindel 4 ist aufgrund der erfindungsgemäß zusammen erfolgenden plastischen Umformung im Wesentlichen spielfrei und besonders haltbar und belastbar.

Wie aus Figur 7 entnehmbar ist, sind in dem gezeigten Beispiel vier Deformationen 52 gleichmäßig über den Umfang verteilt angeordnet. Jede der Deformationen 52 erstreckt sich über einen Teilbereich des Umfangs der Hülse 5 und einen Teilbereich der Länge der Hülse 5. Es ist gut erkennbar, dass die Deformationen 52 in Umfangsrichtung formschlüssig in die korrespondieren, erfindungsgemäß in einem gemeinsamen Umformprozess in das Gewinde 52 eingeformten Ver- bzw. Einformungen 43 eingreifen. Dadurch ist insbesondere sichergestellt, dass die Hülse 5 auch nicht in einer Schraubbewegung von der Gewindespindel 5 gelöst werden kann.

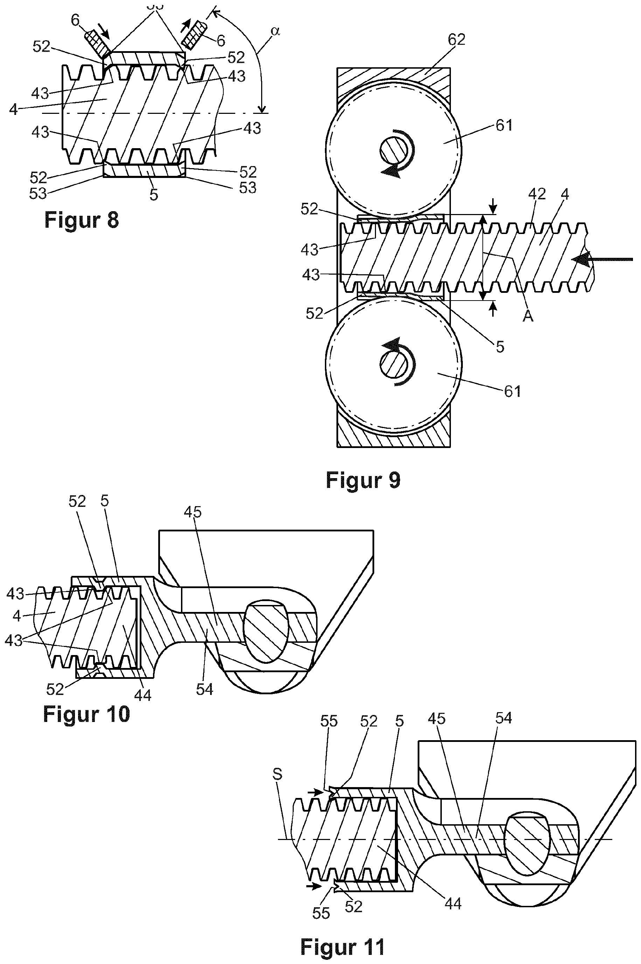

In Figur 8 ist in einer Ansicht wie in Figur 6 eine weitere Möglichkeit gezeigt, erfindungsgemäße plastische Deformationen 52 zu erzeugen. Hierzu wird ebenfalls jeweils ein Presstempel 6 von außen gegen die Hülse 5 angepresst, jedoch nicht radial senkrecht, sondern schräg bezüglich der Spindelachse S in einem spitzen Winkel a. Der oder die Pressstempel 6 werden in einer Vor- und Rückhubbewegung im Bereich der stirnseitigen Außenkanten 53 der Hülse 5 angepresst. Dadurch werden plastische Deformationen 52 im Kantenbereich der Enden gebildet, die sich ihrerseits in das Gewinde eingraben plastisch und in die dabei gebildeten vertieften Verformungen 43 formschlüssig eingreifen.

Eine weitere Möglichkeit zum Fügen der Hülse 5 auf der Gewindespindel 4 ist in Figur 9 gezeigt. Die Hülse 5 ist in zunächst unverformten Zustand lose auf die Gewindespindel 4 aufgeschoben und in Achsrichtung positioniert. Anschließend wird die Gewindespindel 4 in Achsrichtung - wie mit dem Pfeil angedeutet - in den Bearbeitungsspalt zwischen einander radial gegenüberliegende, gegenläufig drehend angetriebene Rollierwalzen 61 einer Walzeinrichtung 62 eingeführt. Im Bearbeitungsspalt ist der Abstand der Rollierwalzen 61 kleiner als der Außendurchmesser A der Hülse 5. Dadurch werden beim Durchgang zwischen den Rollierwalzen 61 lokale Deformationen 52 in die Hülse 5 eingebracht, die in Achsrichtung nutförmig sind, und im Querschnitt im Wesentlichen ausgebildet sein können wie die in Figur 7 dargestellten Deformationen 52. Der Unterschied besteht darin, dass durch die Rollierwalzen 61 eingeformten Deformationen 52 sich über einen größeren Teilbereich in Achsrichtung der Spindelachse S erstrecken können, entweder abschnittweise oder auch über die gesamte Länge der Hülse 5. Vorteile des Rollierverfahrens sind unter anderem hohe Fertigungseffizienz und optimierte Materialumformung. Durch eine Walzeinrichtung 62 mit zwei, drei oder mehr über den Umfang verteilt angeordneten Rollierwalzen 61 können entsprechend viele Deformationen 52 in einem Walzdurchgang erzeugt werden.

Figur 10 zeigt eine weitere Ausführungsform eines Endanschlags, die einen Hülse 5 aufweist, welche gleichartig aufgebaut und durch plastische Deformationen 52 auf dem Außengewinde 42 der Gewindespindel 4 befestigt ist, wie die in Figur 6 und 7 gezeigte Ausführung. Die Hülse 5 hat keinen Durchgang in Achsrichtung, sondern ist topfförmig ausgebildet und weist somit eine Aufnahmeöffnung in Form einer Sacklochöffnung auf. An einem Ende ist sie geschlossen, und mit dem offenen Ende ist die Hülse 5 auf einen Endabschnitt 44 der Gewindespindel 4 axial aufgesetzt. An dem geschlossenen Ende der Hülse 5 ist ein Anbindungsabschnitt 54 angebracht, beispielsweise ähnlich dem Gelenkkopf 45 gemäß Figur 1 und 2 zur Verbindung mit dem Anlenkhebel 120. Der Gelenkkopf 45 kann bevorzugt einstückig mit der Hülse 5 ausgebildet sein. Auf diese Weise ist es möglich, eine Gewindespindel 4 in der für die jeweilige Anwendung geforderten Länge von einem langen Gewinderohling abzulängen, und eine Hülse 5 wie in der Ausführung in Figur 5 in einem Gewindeabschnitt 40 in der Nähe des einen Endes befestigt wird, und eine zweite Hülse 5 mit Anbindungsabschnitt 54 am anderen Ende der Gewindespindel 4, wodurch ein Gelenkkopf bereitgestellt wird. Durch das erfindungsgemäße formschlüssige Fügen wird eine besonders belastbare und sichere Verbindung zwischen der Gewindespindel 4 und den Hülsen 5 geschaffen.

Figur 11 zeigt eine weitere Möglichkeit, an einer Hülse 5 eine erfindungsgemäße Deformation 52 zu erzeugen, nämlich durch plastische Verformungen 55, die beispielsweise als Einformungen stirnseitig in Achsrichtung, also in Richtung der Spindelachse S, in die Hülse 5 eingeformt sind, oder auch durch eine Stauchung des Endbereichs der Hülse 5, so dass das Material der Hüllenwandung fließt und eine gegen die Gewindespindel 4 gerichtete plastische Deformation 52 ausbildet, so dass wie vorangehend beschrieben eine formschlüssige Verbindung mit dem Außengewinde 42 erfolgt.

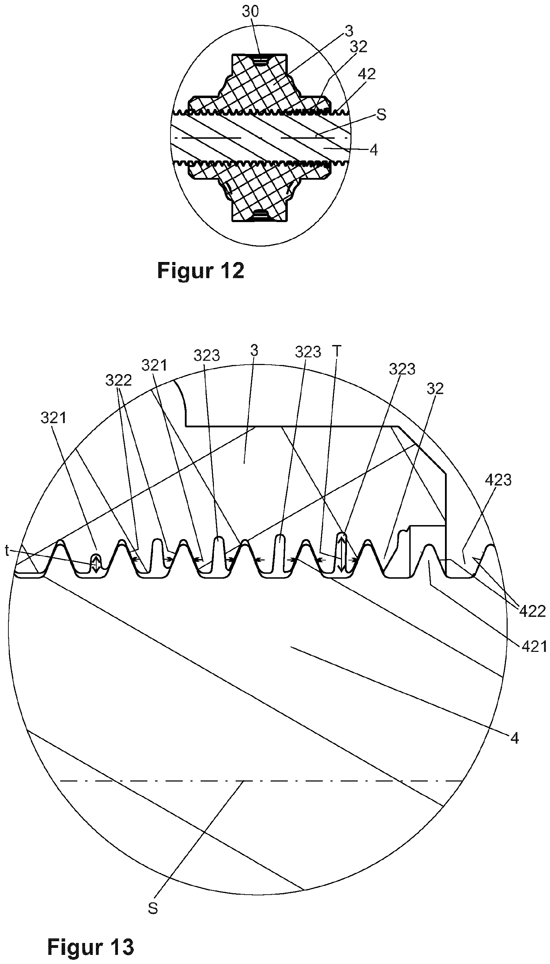

In Figur 12 ist ein Schnitt längs der Spindelachse S durch die Gewindespindel 4 im Eingriff in der Spindelmutter 3 dargestellt. Figur 13 zeigt eine stark vergrößerte Detaildarstellung des Gewindes.

Das Außengewinde 42 ist im gezeigten Beispiel beispielsweise eingängig ausgebildet mit einem schraubenförmig umlaufenden Gewindegang 421, der mit seinen axialen Innenflanken 422 eine ebenfalls schraubenförmig umlaufende Gewindenut 423 begrenzt. In die Gewindenut 423 greift ein korrespondierender Gewindegang 321 des Innengewindes 32 der Spindelmutter 3 ein. Dieser hat axiale Gewindeflanken 322, die gegen die Innenflanken 422 anliegen.

Erfindungsgemäß weist der Gewindegang 321 eine nutförmige Einformung 323 auf, welche radial in das Querschnittsprofil des Gewindegangs 321 eingebracht ist, und radial nach innen zur Spindelachse S hin offen ist.

Dadurch, dass der Gewindegang 321 in entspanntem Zustand, d.h. ohne den Eingriff der Gewindespindel 4, in Achsrichtung Übermaß zu der Gewindenut 423 hat, mit anderen Worten der Abstand der Gewindeflanken 322 des Gewindegangs 321 des Innengewindes 32 der Spindelmutter 3 in Achsrichtung größer ist als der Innenabstand der in der Gewindenut 423 einander gegenüberliegenden Innenflanken 422 des Außengewindes 42 der Gewindespindel 4, werden die Gewindeflanken 322 im gezeigten Eingriff gegeneinander, in Richtung zur Einformung 323 hin zusammengedrückt, dabei wird der Gewindegang 321 axial elastisch zusammengedrückt. Durch die Elastizität des Materials der Spindelmutter 3 werden die Gewindeflanken 322 aufgrund der dabei wirkenden elastischen Reaktionskraft, die mit den Pfeilen eingezeichnet ist, federnd gegen die Innenflanken 422 angepresst. Dadurch ist der Gewindegang 321 in Achsrichtung spielfrei elastisch in der Gewindenut 423 der Gewindespindel 4 verspannt. Auf diese Weise wird Geräuschentwicklung und Verschleiß durch Eliminierung des Umkehrspiels beim Wechsel der Verstellrichtung vermieden.

Vorteilhaft ist es, dass wie dargestellt die Einformung im Endbereich des Innengewindes 32 eine größere radiale Tiefe T hat, die entlang der Achsrichtung auf eine kleinere Tiefe t abfällt. Dadurch kann die axiale Elastizität des Gewindegangs 321 angepasst werden.

Das Gewinde kann sowohl eingängig, wie in den Figuren 12 und 13 dargestellt, als auch mehrgängig ausgebildet sein.

### Bezugszeichenliste

- 1: Lenksäule
- 10: Trageinheit
- 12: Mantelrohr
- 14: Lenkspindel
- 141: lenkradseitiges Ende
- 16: Stelleinheit
- 18: Verschwenkmechanismus
- 100: Konsole
- 102: Befestigungsbohrung
- 104: Manteleinheit
- 106: Schwenkachse
- 110: Schlitz
- 120: Anlenkhebel
- 181: Stellhebel
- 182: Gelenk
- 183: Gelenkachse
- 184: Gelenkachse
- 2: Verstellantrieb
- 2': Verstellantrieb
- 20: Antriebsmotor
- 20': Antriebsmotor
- 22: Schneckenwelle
- 24: Abtriebswelle
- 3,3': Spindelmutter
- 30: Außenverzahnung
- 32: Innengewinde
- 321: Gewindegang
- 322: Gewindeflanken
- 323: Einformung
- 34: Getriebegehäuse
- 4: Gewindespindel
- 421: Gewindegang
- 422: Innenflanken
- 423: Gewindenut
- 4': Gewindespindel
- 40: Gewindeabschnitt
- 42: Außengewinde
- 43: Verformung (Einformung)
- 44: Endabschnitt
- 45: Gelenkkopf
- 5: Hülse
- 51: Anschlagfläche
- 52: plastische Deformation
- 53: Außenkante
- 54: Anbindungsabschnitt
- 55: Verformung
- 6: Pressstempel
- 61: Rollierwalze
- 62: Walzeinrichtung

- L: Längsrichtung
- H: Höhenrichtung
- S: Spindelachse
- d: Innendurchmesser der Hülse 5
- A: Außendurchmesser der Hülse 5
- D: Nenndurchmesser der Gewindespindel 4
- T, t: Tiefe der Einformung 323

## Patentansprüche

1. Lenksäule (1) für ein Kraftfahrzeug, mit einer Trageinheit (10), die an einer Fahrzeugkarosserie anbringbar ist, und von der eine Stelleinheit (16) gehalten ist, in der eine Lenkspindel (14) drehbar gelagert ist, und mit einem Verstellantrieb (2, 2'), der zwischen der Trageinheit (10) und der Stelleinheit (16) angeordnet ist, und von dem die Stelleinheit (16) relativ zur Trageinheit (10) verstellbar ist, wobei der Verstellantrieb (2) eine in eine Spindelmutter (3, 3') eingreifende Gewindespindel (4) mit einem Außengewinde (42) aufweist, , wobei auf dem Außengewinde (42) der Gewindespindel (4, 4') zur Begrenzung einer Bewegung der Spindelmutter (3, 3') in Richtung der Spindelachse (S) ein Anschlagkörper (5) befestigt ist, der einen Gewindeabschnitt der Gewindespindel (4, 4') umgibt, wobei der Anschlagkörper (5) mindestens eine partielle plastische Deformation (52) aufweist, wobei die plastische Deformation (52) fest mit dem Außengewinde (42) der Gewindespindel (4) verbunden ist, **dadurch gekennzeichnet, dass** die Deformation (52) durch eine von außen in den Anschlagkörper (5) eingebrachte Um- oder Einformung gebildet wird.

2. Lenksäule (1) nach Anspruch 1, **dadurch gekennzeichnet, dass** die Deformation (52) mit einer plastischen Verformung (43) des Außengewindes (42) formschlüssig verbunden ist.

3. Lenksäule (1) nach einem der vorangehenden Ansprüche, **dadurch gekennzeichnet, dass** der Anschlagkörper (5) hülsenförmig ausgebildet ist.

4. Lenksäule (1) nach einem der vorangehenden Ansprüche, **dadurch gekennzeichnet, dass** der Anschlagkörper (5) eine Durchgangsöffnung mit einem Innendurchmesser (d) aufweist, der größer oder gleich dem Außendurchmesser (D) des Außengewindes (42) ist, wobei die Deformation (52) in einem Teilbereich über den Innendurchmesser (d) nach innen in die Durchgangsöffnung vorsteht.

5. Lenksäule (1) nach einem der vorangehenden Ansprüche, **dadurch gekennzeichnet, dass** die Deformation (52) sich über einen Umfangsteilabschnitt und/oder einen Längenteilabschnitt des Anschlagkörpers (5) erstreckt.

6. Lenksäule (1) nach einem der vorangehenden Ansprüche, **dadurch gekennzeichnet, dass** eine Mehrzahl von Deformationen (52) über den Anschlagkörper (5) verteilt angeordnet ist.

7. Lenksäule (1) nach einem der vorangehenden Ansprüche, **dadurch gekennzeichnet, dass** der Anschlagkörper (5) einen Anbindungsabschnitt (54) aufweist.

8. Verfahren zur Herstellung einer Lenksäule (1) für ein Kraftfahrzeug, mit einer Trageinheit (10), die an einer Fahrzeugkarosserie anbringbar ist, und von der eine Stelleinheit (16) gehalten ist, in der eine Lenkspindel (14) drehbar gelagert ist, und mit einem Verstellantrieb (2, 2'), der zwischen der Trageinheit (10) und mit der Stelleinheit (16) angeordnet ist, und von dem die Stelleinheit (16) relativ zur Trageinheit (10) verstellbar ist, wobei der Verstellantrieb (2, 2') eine in eine Spindelmutter (3, 3') eingreifende Gewindespindel (4, 4') mit einem Außengewinde (42) aufweist, wobei auf der Gewindespindel (4, 4') zur Begrenzung der Bewegung der Spindelmutter (3, 3') ein Anschlagkörper (5) befestigt ist, der einen Gewindeabschnitt der Gewindespindel (4, 4') umgibt, **gekennzeichnet dadurch,**
**dass** der Anschlagkörper (5) auf der Gewindespindel (4, 4') positioniert wird, und anschließend der Anschlagkörper (5) partiell plastisch verformt zur Erzeugung mindestens einer Deformation (52), die fest mit dem Außengewinde (42) der Gewindespindel (4) verbunden ist.

9. Verfahren nach Anspruch 8, **dadurch gekennzeichnet, dass** die Deformation (52) des Anschlagkörpers (5) plastisch in das Außengewinde (42) eingeformt wird zur Erzeugung einer formschlüssig mit der Deformation (52) verbundenen Verformung (43) des Außengewindes.

## Claims

1. Steering column (1) for a motor vehicle, having a supporting unit (10) that is attachable to a vehicle body and holds an actuating unit (16) in which a steering spindle (14) is rotatably mounted, and having an adjusting drive (2, 2') which is arranged between the supporting unit (10) and the actuating unit (16) and with which the actuating unit (16) is adjustable relative to the supporting unit (10), wherein the adjusting drive (2) has a threaded spindle (4) that engages in a spindle nut (3, 3') and has an external thread (42), wherein a stop body (5) is fastened to the external thread (42) of the threaded spindle (4, 4') to limit a movement of the spindle nut (3, 3') in the direction of the spindle axis (S), said stop body (5) surrounding a threaded portion of the threaded spindle (4, 4'), wherein the stop body (5) has at least one partial plastic deformation (52), wherein the plastic deformation (52) is firmly connected to the external thread (42) of the threaded spindle (4), **characterized in that** the deformation (52) is formed by a reshaping or recess introduced into the stop body (5) from the outside.

2. Steering column (1) according to Claim 1, **characterized in that** the deformation (52) is form-fittingly connected to a plastic deformation (43) of the external thread (42).

3. Steering column (1) according to either of the preceding claims, **characterized in that** the stop body (5) is sleeve-like.

4. Steering column (1) according to one of the preceding claims, **characterized in that** the stop body (5) has a through-opening with an inside diameter (d) that is greater than or equal to the outside diameter (D) of the external thread (42), wherein the deformation (52) protrudes inwardly into the through-opening beyond the inside diameter (d) in a subregion.

5. Steering column (1) according to one of the preceding claims, **characterized in that** the deformation (52) extends around a part of the circumference and/or along a part of the length of the stop body (5).

6. Steering column (1) according to one of the preceding claims, **characterized in that** a plurality of deformations (52) are distributed over the stop body (5).

7. Steering column (1) according to one of the preceding claims, **characterized in that** the stop body (5) has an attachment portion (54).

8. Method for producing a steering column (1) for a motor vehicle, having a supporting unit (10) that is attachable to a vehicle body and holds an actuating unit (16) in which a steering spindle (14) is rotatably mounted, and having an adjusting drive (2, 2') which is arranged between the supporting unit (10) and with the actuating unit (16) and with which the actuating unit (16) is adjustable relative to the supporting unit (10), wherein the adjusting drive (2, 2') has a threaded spindle (4, 4') that engages in a spindle nut (3, 3') and has an external thread (42), wherein a stop body (5) is fastened to the threaded spindle (4, 4') to limit the movement of the spindle nut (3, 3'), said stop body (5) surrounding a threaded portion of the threaded spindle (4, 4'), **characterized in that** the stop body (5) is positioned on the threaded spindle (4, 4') and subsequently the stop body (5) is partially plastically deformed to create at least one deformation (52) that is firmly connected to the external thread (42) of the threaded spindle (4).

9. Method according to Claim 8, **characterized in that** the deformation (52) of the stop body (5) is recessed plastically into the external thread (42) to create a deformation (43) of the external thread that is form-fittingly connected to the deformation (52) .

## Revendications

1. Colonne de direction (1) pour un véhicule à moteur, comportant une unité porteuse (10) qui peut être mise en place sur une carrosserie de véhicule, et par laquelle une unité d'actionnement (16) est retenue, dans laquelle un arbre de direction (14) est monté rotatif, et comportant un entraînement de réglage (2, 2') qui est disposé entre l'unité porteuse (10) et l'unité d'actionnement (16), et par lequel l'unité d'actionnement (16) est déplaçable par rapport à l'unité porteuse (10), l'entraînement de réglage (2) comprenant une broche filetée (4) venant en prise dans un écrou de broche (3, 3') et dotée d'un filetage extérieur (42), un corps de butée (5) qui entoure une section filetée de la broche filetée (4, 4') étant fixé sur le filetage extérieur (42) de la broche filetée (4, 4') pour la limitation d'un déplacement de l'écrou de broche (3, 3') en direction de l'axe de broche (S),
le corps de butée (5) comprenant au moins une déformation plastique partielle (52), la déformation plastique (52) étant reliée solidement au filetage extérieur (42) de la broche filetée (4), **caractérisée en ce que** la déformation (52) est formé par un formage ou un renfoncement ménagé depuis l'extérieur dans le corps de butée (5).

2. Colonne de direction (1) selon la revendication 1, **caractérisée en ce que** la déformation (52) est reliée par complémentarité de formes à une partie façonnée plastique (43) du filetage extérieur (42).

3. Colonne de direction (1) selon l'une des revendications précédentes, **caractérisée en ce que** le corps de butée (5) est réalisé en forme de douille.

4. Colonne de direction (1) selon l'une des revendications précédentes, **caractérisée en ce que** le corps de butée (5) comprend une ouverture traversante présentant un diamètre intérieur (d) qui est supérieur ou égal au diamètre extérieur (D) du filetage extérieur (42), la déformation (52) faisant saillie au-delà du diamètre intérieur (d) vers l'intérieur dans l'ouverture traversante dans une région partielle.

5. Colonne de direction (1) selon l'une des revendications précédentes, **caractérisée en ce que** la déformation (52) s'étend sur une section partielle périphérique et/ou une section partielle longitudinale du corps de butée (5).

6. Colonne de direction (1) selon l'une des revendications précédentes, **caractérisée en ce qu'**une pluralité de déformations (52) est disposée de manière répartie sur le corps de butée (5).

7. Colonne de direction (1) selon l'une des revendications précédentes, **caractérisée en ce que** le corps de butée (5) comprend une section de connexion (54).

8. Procédé de fabrication d'une colonne de direction (1) pour un véhicule à moteur, comportant une unité porteuse (10) qui peut être mise en place sur une carrosserie de véhicule, et par laquelle une unité d'actionnement (16) est retenue, dans laquelle un arbre de direction (14) est monté rotatif, et comportant un entraînement de réglage (2, 2') qui est disposé entre l'unité porteuse (10) et avec l'unité d'actionnement (16), et par lequel l'unité d'actionnement (16) est déplaçable par rapport à l'unité porteuse (10), l'entraînement de réglage (2, 2') comprenant une broche filetée (4, 4') venant en prise dans un écrou de broche (3, 3') et dotée d'un filetage extérieur (42), un corps de butée (5) qui entoure une section filetée de la broche filetée (4, 4') étant fixé sur la broche filetée (4, 4') pour la limitation du déplacement de l'écrou de broche (3, 3'), **caractérisé en ce que**
le corps de butée (5) est positionné sur la broche filetée (4, 4'), et ensuite le corps de butée (5) est déformé de manière plastique partiellement pour la production d'au moins une déformation (52) qui est reliée solidement au filetage extérieur (42) de la broche filetée (4).

9. Procédé selon la revendication 8,
**caractérisé en ce que** la déformation (52) du corps de butée (5) est formée de manière plastique dans le filetage extérieur (42) pour la production d'une partie façonnée (43) du filetage extérieur reliée par complémentarité de formes à la déformation (52).
